# EUROPÄISCHE PATENTANMELDUNG

(11) **EP 4 458 446 A1**
(43) Veröffentlichungstag der Anmeldung: **06.11.2024**
(21) Anmeldenummer: 24170501.1
(22) Anmeldetag: 16.04.2024
(51) Int. Cl.: B01D 29/23, B01D 29/58, B01D 36/00, B01D 35/027

(54) **FILTERVORRICHTUNG**

(30) Priorität: 27.04.2023 DE 102023001705
(71) Anmelder: Hydac Filtertechnik GmbH, 66280 Sulzbach/Saar (DE)
(72) Erfinder: Nenno, Alexander, 66646 Marpingen (DE); Morgens, Klaus, 54293 Trier (DE)
(74) Vertreter: Bartels und Partner, Patentanwälte

(57) **Zusammenfassung**

2. Filtervorrichtung zumindest bestehend aus zwei Filterelementen (10, 12), die in Fluiddurchströmungsrichtung gesehen hintereinander angeordnet sind, dadurch gekennzeichnet, dass die beiden Filterelemente (10, 12) der Gasabscheidung aus dem Fluid dienen, die jeweils mit ihrem Innenumfang (30, 14) einen Innenraum (28) umfassen, wobei in Fluiddurchströmungsrichtung gesehen das äußere Filterelement (12) entlang seines Innenumfanges (14) gemessen eine Faltendichte von 0,1 bis 3 Falten pro cm und das innere Filterelement (10) entlang seines Innenumfanges (30) gemessen eine Faltendichte von 3 bis 7 Falten pro cm aufweisen.

## Beschreibung

Die Erfindung betrifft eine Filtervorrichtung zumindest bestehend aus zwei Filterelementen, die in Fluiddurchströmungsrichtung gesehen hintereinander angeordnet sind.

Durch DE 10 2021 002 428 A1 ist eine gattungsgemäße Filtervorrichtung zumindest bestehend aus zwei koaxial zueinander angeordneten Filterelementen bekannt, die zwischen sich einen ringförmigen Hohlraum respektive Fluidraum begrenzen, wobei die dem Hohlraum zugewandte Innenseite des äußeren Filterelementes zumindest teilweise eine Abscheideeinrichtung für Gasblasen, wie Luftblasen, aufweist und wobei der Hohlraum kopfseitig in mindestens eine Abgabeöffnung für dahingehende Gasblasen ausmündet. Für die angesprochene Abscheideeinrichtung respektive auf der Innenumfangsseite des äußeren Filterelementes wird eine hierfür geeignete Medienlage mit Koaleszenzeigenschaft eingesetzt, die aus einem Vlies besteht mit einem vorgegebenen Porengrößengradienten, das ausgehend von einer zuinnerst liegenden Feinstruktur zur Abströmseite hin gesehen zusehends in eine Grobstruktur übergeführt wird, was beim Durchströmen des äußeren Filtermediums mit Fluid dazu führt, dass die in dem Fluid regelmäßig feinst dispergierten Blasen aufgrund der Koaleszenzeigenschaft der insoweit als Abgabeschicht konzipierten Medienlage, zu volumetrisch größeren Einheiten zusammengeführt wird. Das jeweils bevorzugt zum Einsatz kommende Fasermaterial, regelmäßig in Form des genannten Vlieses, kann Polyesterfasern aufweisen. Das zuinnerst liegende Filterelement dient der Partikelfiltration, wohingegen das, vorzugsweise in koaxialer Anordnung, zuäußerst liegende Filterelement einen Entgasungsfilter oder Entgasungsstufe bildet, indem eine Art Luftblasenkoaleszenz an der Innenseite stattfindet, die dem angesprochenen Hohlraum zwischen den beiden Filterelementen benachbart zugewandt ist. Demgemäß sind in einer Filtereinheit ein Partikelfilter und ein Entgasungs- oder Gasabscheidefilter als handelbare Baueinheit zusammengefasst.

Durch WO 2020/165146 A1 ist ein Abscheideelement zum Abscheiden von Gasblasen aus einer Flüssigkeit, insbesondere aus Hydrauliköl, bekannt, das einen Volumenkörper mit einer offenporigen Materialstruktur umfasst, die eine Vielzahl von Zellen aufweist, die derart zueinander versetzt angeordnet sind, dass eine Vielzahl von Strömungswegen zur Führung von Gasblasen durch die Materialstruktur labyrinthartig verläuft, die einen Kontaktbereich umfasst, in dem sich wenigstens zwei der Strömungswege zumindest abschnittsweise einander annähern, sodass sich im Betrieb die auf den Strömungswegen geführten Gasblasen einander kontaktieren und sich so zu einer jeweils größeren Gasblase zwecks deren Austrag aus der Flüssigkeit verbinden. Eine größere Gasblase weist regelmäßig eine höhere Auftriebskraft auf, sodass diese aus der Flüssigkeit leichter abführbar ist, indem sie schneller in dieser aufsteigt. Diese Abscheidewirkung aufgrund des archimedischen Prinzips wird dadurch begünstigt, dass durch den labyrinthartigen Verlauf der Strömungswege zwanglos eine Vergrößerung der Gasblasen erfolgt, wodurch diese aus der Flüssigkeit effizient abgeschieden werden können.

Durch DE 10 2018 118 139 A1 ist in anderem Zusammenhang bei einer Vorrichtung zum Aufnehmen von Öl von einer Wasseroberfläche festgestellt worden, dass hydrophobe Flächengebilde in Form gitterartig Strukturen die Möglichkeit eröffnen unter Wasser eine Schicht aus Gas auf der Oberfläche zu halten. Diese Eigenschaft wird fachsprachlich als Salvinia-effekt bezeichnet, der die Stabilisierung einer Luftschicht auf einer Oberfläche unter einer Flüssigkeit beschreibt.

Ausgehend von diesem Stand der Technik liegt der Erfindung die Aufgabe zugrunde, die eingangs beschriebene gattungsgemäße Lösung dahingehend weiter zu verbessern, dass es bei einer Filtervorrichtung zu einer verbesserten Gasabscheidung, insbesondere Luftabscheidung, kommt.

Eine dahingehende Aufgabe löst eine Filtervorrichtung mit den Merkmalen des Patentanspruches 1 in seiner Gesamtheit.

Als erfindungswesentlich wird dabei angesehen, dass die beiden Filterelemente der Gasabscheidung aus dem Fluid dienen, die jeweils mit ihrem Innenumfang einen Innenraum umfassen, wobei in Fluiddurchströmungsrichtung gesehen das äußere Filterelement entlang seines Innenumfanges gemessen eine Faltendichte von 0,1 bis 3 Falten pro Zentimeter und das innere Filterelement entlang seines Innenumfanges gemessen eine Faltendichte von 3 bis 7 Falten pro Zentimeter aufweist. Dergestalt ist eine zweistufige Entgasungs-Filtervorrichtung geschaffen, die dazu geeignet ist in besonders effizienter Weise Gasblasen aus Fluiden, wie Kühlschmierstoffen (KSS), abzuscheiden. Sofern der Begriff Filterelement verwendet ist, dient das jeweilige Element vorrangig der Gasabscheidung. Es kann aber auch bedarfsweise in geringem Umfang eine Partikelverschmutzung aus dem Fluidstrom aufnehmen.

Die Filtervorrichtung wird regelmäßig von innen nach außen durchströmt und dem inneren Filterelement kommt die Aufgabe der Strömungsgleichrichtung des Fluids zu, bei gleichzeitiger Vergrößerung der Gasblasen, die aufsteigend als große Blasen aus dem Fluid abgeschieden werden. Das zuäußerst angeordnete Filterelement hat hingegen die Aufgabe der Nachseparation der verbliebenen feinst verteilten Gasblasen, die wiederum durch Koaleszenzvorgänge zu größeren Blasenanordnungen verschmelzen, die durch Aufsteigen aufgrund des archimedischen Prinzipes aus dem Fluid in die Umgebung abgeschieden werden.

Für die dahingehenden Abscheidevorgänge haben sich die genannten unterschiedlichen Faltendichten der beiden Filterelemente zueinander als besonders vorteilhaft erwiesen. Insbesondere weist die innere Filterstufe mit dem inneren Filterelement eine höhere Faltendichte auf als die beanspruchte Faltendichte der äußeren Filterstufe in Form des äußeren Filterelementes, welches das innere Filterelement, vorzugsweise in koaxialer Anordnung, umfasst. Im Hinblick auf die jeweilige Faltendichte ist vorzugsweise vorgesehen, dass der Bereich der Faltenzahl gemessen pro Zentimeter Innenumfangslänge des äußeren Filterelementes dort endet, wo der mögliche Bereich der kleinsten Faltenzahl gemessen pro Zentimeter Innenumfangslänge für das innere Filterelement beginnt.

Des Weiteren erhält man durch die hohe Packungsdichte an Falten für die erste Filterstufe respektive das innere Element eine Strömungsberuhigung bei gleichzeitiger Gleichrichtung der Strömung bei Durchströmen des Elementes mit Fluid. Die bis dahin noch nicht abgeschiedenen Luftblasen werden dann von der äußeren, zweiten Entgasungsstufe in Form des äußeren Filterelementes zurückgehalten, koaleszieren dabei, und steigen dann ebenfalls nach oben für einen Austrag aus dem Fluid.

Vorzugsweise ist vorgesehen, dass das jeweilige Filterelement einen Hohlzylinder aus einzelnen Filterfalten ausbildet und dass die Filterelemente koaxial zueinander angeordnet sind. Im Bedarfsfall können die beiden Filterelemente auch noch um weitere Filterelementanordnungen erweitert werden. Besonders bevorzugt besteht das jeweilige Filterelement aus einem sogenannten Mesh-Pack, das an seinen freien Stirnseiten in jeweils zugehörige Endkappen eingebracht, insbesondere eingeklebt, ist. Die einzelnen Filterstufen respektive die einzelnen Filterelemente können auch getrennt voneinander als Einzelfilter gefertigt werden und dann über eine Steck- oder Schraubverbindung nachträglich zum zweistufigen Gesamtfilter montiert werden.

Bei einer bevorzugten Ausführungsform der erfindungsgemäßen Filtervorrichtung ist vorgesehen, dass die einander benachbart gegenüberliegenden Filterelemente einen Ringraum zwischen sich begrenzen, der gleichfalls beim Übergang des Fluidstroms von innerem Filterelement zu äußerem Filterelement zu einer Vergleichsmäßigung des Fluidstroms führt und ferner ist der Ringraum besonders geeignet aus dem Fluid abgeschiedene Gasblasen nach oben aus dem Fluid zu transportieren.

Bei einer besonders bevorzugten Ausführungsform der erfindungsgemäßen Filtervorrichtung ist vorgesehen, dass die Filterelemente an ihren freien Stirnseiten zwischen zwei Endkappen unter Anlage mit denselben aufgenommen sind, von denen eine geschlossen und die andere mit einer Durchlassöffnung versehen ist, die in den Innenraum des zuinnerst liegenden Filterelementes ausmündet. Dergestalt kann bodenseitig über die untere Durchlassöffnung ein Unfiltratstrom auf die Innenseite der Filtervorrichtung geführt werden. Sofern die im Betrieb zuoberst liegende obere Endkappe bevorzugt geschlossen ausgeführt ist, werden die einzelnen Gasblasen, die sich zwangsläufig auf der Unterseite der oberen Endkappe ansammeln, nach außen aus der Filtervorrichtung in die Umgebung abgeführt, die auch aus einer Tankinnenseite gebildet sein kann. Bei einer alternativen Ausgestaltung besteht auch die Möglichkeit die obere Endkappe mit Durchlassstellen zu versehen, um dergestalt die Gasblasen über die Endkappe aus der Filtervorrichtung abführen zu können. Insbesondere mündet eine solche Gasblasen-Abgabeöffnung in der Endkappe in den Ringraum zwischen den beiden Filterelementen ein. Bedarfsweise können auch mehrere Abgabeöffnungen vorgesehen sein.

Bei einer bevorzugten Ausführungsform der erfindungsgemäßen Filtervorrichtung ist vorgesehen, dass beide Endkappen auf ihren einander abgewandten Stirnseiten nach außen hin vorstehende Befestigungselemente aufweisen, die dem Festlegen eines Filters mit den beiden Filterelementen an korrespondierenden Drittbauteilen dienen, wie Aufnahmen auf der Innenseite eines Fluid-Vorratstanks. Dergestalt sind in platzsparender Weise Anschlussmöglichkeiten geschaffen für das Festlegen des jeweiligen Filterelementes, die darüber hinaus von außen her gut zugänglich sind.

Bei einer bevorzugten Ausführungsform der erfindungsgemäßen Filtervorrichtung ist dabei vorgesehen, dass das eine Befestigungselement der einen, vorzugsweise oberen, Endkappe aus einem hohlzylindrischen Ring besteht, der bodenseitig geschlossen einstückiger Bestandteil dieser einen Endkappe ist. Dergestalt ist zumindest das eine Befestigungselement eigenstabil mit der einen oberen Endkappe verbunden.

Bei einer bevorzugten Ausführungsform der erfindungsgemäßen Filtervorrichtung ist dabei vorgesehen, dass der als Führung konzipierte Ringkörper koaxial zum oberen scheibenförmigen Verlauf der einen Endkappe angeordnet ist und auf der gegenüberliegenden, unteren Seite koaxial zum Ringkörper ein Strömungsleitkörper vorhanden ist, der zu seinem freien, unteren Ende hin konisch zuläuft und in einen Innenraum des inneren Filterelementes des Filters ausmündet. Der dahingehende Strömungsleitkörper verbessert die Fluidführung innerhalb des Filters mit seinen beiden gasabscheidenden Filterelementen.

Bei einer bevorzugten Ausführungsform der erfindungsgemäßen Filtervorrichtung ist dabei vorgesehen, dass das weitere Befestigungselement der anderen, vorzugsweise unteren, Endkappe aus einem hohlzylindrischen Anschlussstutzen besteht, der einstückiger Bestandteil der anderen Endkappe ist, der entlang seines unteren Endbereiches in einer Aufnahmenut auf seiner Innenumfangsseite einen Dichtring trägt, und der die Durchlassöffnung umfasst. Dergestalt lässt sich in abdichtender Weise im unteren Anschlussbereich des Filters dieser an Fluidzuführungen festlegen, wie sie regelmäßig Bestandteil eines Fluid-Vorratstanks sind. Da der Dichtring im hohlzylindrischen Anschlussstutzen in der Art eines Loslagers entlang einer zuordenbaren Aufnahme des Fluid-Vorratstanks verfahrbar ist, kann der Filter zwischen zugeordneten Aufnahmen des Fluid-Vorratstanks in der Art einer schwimmenden Lagerung aufgenommen sein und der Filter positioniert sich zwischen den Aufnahmen abhängig von den anstehenden Fluiddrücken selbstständig. Insoweit lässt sich der Filter im Rahmen eines größeren Toleranzfeldes bauen und kann dennoch sicher zwischen den Aufnahmen des Tanks aufgenommen werden.

Bei einer weiteren bevorzugten Ausführungsform der erfindungsgemäßen Filtervorrichtung ist dabei vorgesehen, dass der Ring und der Aufnahmestutzen entlang der Längsachse des Filters konzentrisch zueinander angeordnet sind und dass der freie Innendurchmesser des Ringes kleiner, vorzugsweise um die Hälfte kleiner, ist als der freie Innendurchmesser des Aufnahmestutzens. Vorzugsweise ist dabei ferner vorgesehen, dass die Innenumfangsseiten von Ring und Anschlussstutzen bis auf etwaige Dichtringaufnahmen absatzfrei ausgeführt sind. Dergestalt ist eine besonders einfache Fertigung für den Filter mit den nach außen vorstehenden Befestigungselementen erreicht.

Bei einer weiteren bevorzugten Ausführungsform der erfindungsgemäßen Filtervorrichtung ist dabei vorgesehen, dass das jeweilige Filterelement mehrlagig aufgebaut ist, vorzugsweise aus 2 bis 5 Lagen besteht, besonders bevorzugt aus drei Lagen, besteht, die jeweils einzelne Durchlässe aufweisen, die in Fluiddurchströmungsrichtung gesehen zumindest teilweise von großen zu kleinen freien Querschnitten übergehen. Vorzugsweise ist dabei die jeweilige Lage aus einem Gewebe gebildet. Vorzugsweise sind insbesondere bei einem dreilagigen Filtermedienaufbau für das jeweilige Filterelement zwischen zwei Decklagen Durchlässe in der Größenordnung von 200 bis 1000 *µ*m, vorzugsweise von 400 bis 600 *µ*m, besonders bevorzugt von 530 *µ*m vorgesehen, wobei zwischen den beiden benachbarten Decklagen eine Zwischenlage mit Durchlässen in der Größenordnung von 0,1 bis 500 *µ*m, vorzugsweise von 30 bis 150 *µ*m, besonders bevorzugt von 45 *µ*m aufgenommen ist.

Neben der Koaleszenzeigenschaft dieses speziellen Lagenaufbaus, bei dem kleinere Luftblasen unter Bildung von größeren Luftblasen zusammengefasst nach dem archimedischen Prinzip durch Aufsteigen in der Flüssigkeit aus dieser abgeschieden werden, hat sich im Rahmen praktischer Versuche gezeigt, dass der Lagenaufbau auch zu dem sogenannten Salvinia-Effekt mit beiträgt, bei dem sich eine Gasschicht respektive Luftschicht auf der Oberfläche einer Gewebe- oder Lagenstruktur mehr oder minder dauerhaft stabilisiert und dergestalt zunächst anlagert, wobei der jeweilige Durchlass- oder Maschenrand der Lagenstruktur eine Barriere für die Luftschicht bildet, die dann im Rahmen des üblichen Filtrationsbetriebes dennoch von der Lagenstruktur abgelöst eine vergrößerte Gasblase ausbildet, die im Fluid nach oben steigt. Insoweit können hier zwei unterschiedliche Abscheidemechanismen (Koaleszenz und Salvinia-Effekt) zum Tragen kommen, was die Abscheideleistung für die Filtervorrichtung erhöht gegenüber vergleichbar aufgebauten Filtervorrichtungslösungen nach dem Stand der Technik.

Dahingehend hat es sich als besonders vorteilhaft erwiesen, die jeweilige Decklage mit einzelnen Durchlässen zu versehen, die jeweils etwa fünf bis elfmal so groß sind wie der jeweilige Durchlass der in Durchströmungsrichtung gesehen nachfolgenden Lage, wobei vorzugsweise der jeweilige Fadendurchmesser des Gewebes etwa 2 bis 5 Mal so groß gewählt wird wie der jeweilige Fadendurchmesser der nachfolgenden Lage.

Dergestalt bestehen die einzelnen Lagen, insbesondere Gewebelagen, bevorzugt aus Metalldraht; es können aber auch ohne Weiteres Kunststoffdrähte Verwendung finden oder geeignetes Fasermaterial, jeweils aus Polypropylen (PP), Polyamid (PA) oder Polyethersulfon (PES).

Die eingesetzten Gewebe sind bevorzugt in Leinwandbindung (Webart Glatt) ausgeführt, bestehend aus einzelnen Kett- und Schussfäden. Neben der genannten Leinwandbindung und der Atlasbindung (A4/1, A7/1,..) kann auch eine Köperbindung (K2/1, K3/1, K2/2,..) Verwendung finden.

Zur Verbesserung der Stabilität ist vorgesehen, dass das jeweilige Filterelement zumindest auf seiner der Fluiddurchströmung jeweils abgewandten Seite von einem fluiddurchlässigen Stützkörper umfasst ist, an dem sich im Betrieb die plissierte Filtermatte abstützen kann.

Es ist für einen Durchschnittsfachmann auf dem Gebiet solcher Filtervorrichtungen überraschend, dass er durch die geeignete Wahl einer bestimmten Faltenanzahl von innerem und äußerem Filterelement zu deutlich verbesserten Gas-Austragraten kommt gegenüber vergleichbar aufgebauten Filterlösungen.

Gegenstand der Erfindung ist auch ein Tank-Entgasungsfilter zumindest bestehend aus einem Tank, der der Fluidaufnahme bis zu einem vorgebbaren Füllstandsniveau dient und mit mindestens einer Filtervorrichtung wie vorstehend vorgestellt, die jeweils bodenseitig an einen Unfiltratanschluss im Tank angeschlossen ist und die abgeschiedenes Gas oberhalb des jeweiligen Füllstandsniveaus abgibt, wobei voneinander separierte Auslässe für Gas und für Fluid im Tankbehälter vorgesehen sind. Insbesondere befindet sich der Auslass für Gas an einer obersten Stelle des Tankgehäuses, wohingegen die Fluidabfuhr aus dem Tank sich an einer unteren Abgabeöffnung des Tankbehälters befindet.

Als besonders bevorzugte Verwendung der beschriebenen Filtervorrichtung ist vorgesehen, dass diese unter Einsatz des Tank-Entgasungsfilters dem Entgasen von Kühlschmierstoff (KSS) dient, der insbesondere im Rahmen einer spanenden Bearbeitung eingesetzt ist.

Bei Werkzeugmaschinen werden zur Kühlung und Schmierung im Bearbeitungsprozess regelmäßig solche Kühlschmierstoffe eingesetzt, die normalerweise prozessbedingt im Tank der Anlage einen erhöhten Anteil freier Luftblasen, auch in Form feinst dispergierter Blasen, aufweist. Solche Luftblasen sind zum einen nicht förderlich für den spanenden Bearbeitungsprozess und führen zum anderen aufgrund der erhöhten Schaumneigung des Kühlschmierstoffes zur Bildung von Oberflächenschaum und damit verbunden zu einer ungewollten Füllstandserhöhung bis hin zum Überlaufen des Vorratstanks. Mit der erfindungsgemäßen Filtervorrichtung, die in der Lage ist die freien Luftblasen aus dem Kühlschmierstoff sicher abzuscheiden, ist diesen Nachteilen wirksam begegnet. Dabei kann der angesprochene Entgasungsfilter als Filtervorrichtung entweder im Vorratstank eines Nebenstromaggregats (Pumpe und Tank) oder im Hauptstrom als sogenannter Saugfilter eingesetzt werden.

Im Folgenden wird die erfindungsgemäße Lösung anhand einer Ausführungsform näher beschrieben. Dabei zeigen in prinzipieller und nicht maßstäblicher Darstellung die
- Figur 1: in der Art eines Längsschnittes die Filtervorrichtung als Ganzes;
- Figur 2: in der Art eines Querschnitts einen Teil der Filtervorrichtung nach der Figur 1;
- Figur 3: wiederum in der Art eines Längsschnittes den unteren und den oberen Teil der Filtervorrichtung nach der Figur 1 mit eingezeichneten Pfeilen zur Erläuterung der Fluidströmungen;
- Figur 4: in schematischer Darstellung eine Luftabscheidung auf einer Anströmseite A oder auf einer Abströmseite B nach Durchströmen eines in den Figuren 1 bis 3 dargestellten Filterelementes, bestehend aus drei Gewebelagen; und
- Figur 5: in stark vereinfachter Darstellung den Einsatz einer Filtervorrichtung nach den Figuren 1 bis 3 in einem Vorratstank zur näheren Erläuterung der Verwendung einer Filtervorrichtung im Rahmen der Entgasung für Kühlschmierstoffe (KSS).

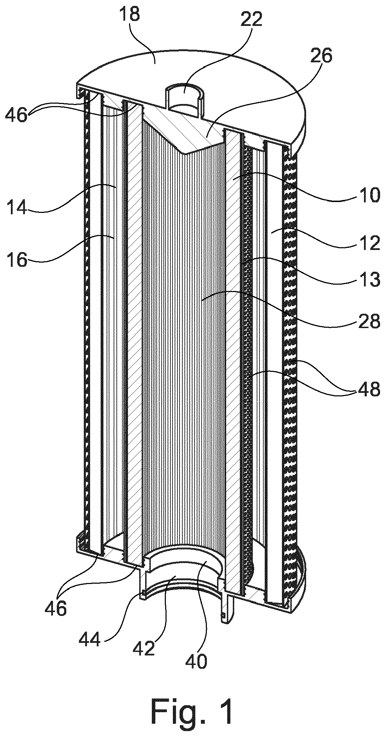

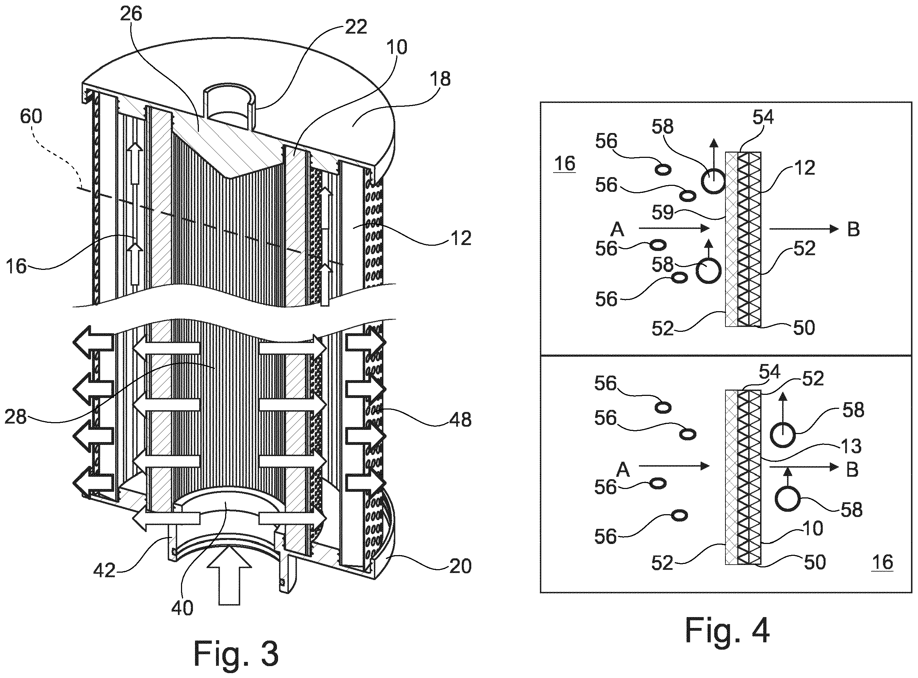

In prinzipieller Darstellung und stark vereinfacht zeigt die Figur 1 die wesentlichen Elemente einer Filtervorrichtung als Ganzes. Die Filtervorrichtung weist im vorliegenden Fall zwei Filterelemente 10, 12 auf, die in Fluid-Durchströmungsrichtung gesehen hintereinander angeordnet sind. Die jeweilige Fluid-Durchströmungsrichtung ist in der Figur 3 für das Filterelement nach der Figur 1 mit Pfeilen angedeutet. Bei der Ausführungsform nach der Figur 1 dient das innen gelegene Filterelement 10 ebenso wie das außenliegende Filterelement 12 der Gasabscheidung aus einem Fluid, beispielsweise in Form von Hydrauliköl oder Kühlschmierstoff (KSS).

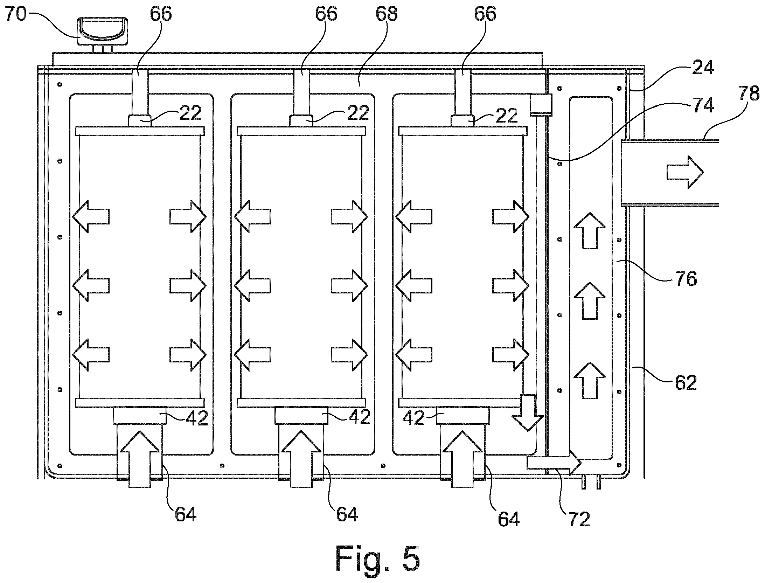

Die beiden Filterelemente 10, 12 sind als Hohlzylinder konzipiert sowie bevorzugt mehrlagig aufgebaut und plissiert. Die beiden konzentrisch respektive koaxial zueinander angeordneten Filterelemente 10, 12 sind auf Abstand zueinander angeordnet und begrenzen mit ihrem jeweiligen Außenumfang 13 bzw. Innenumfang 14 einen ringförmigen Hohlraum als Fluidraum 16. Des Weiteren sind die beiden Filterelemente 10, 12 an ihren freien Stirnseiten von zwei Endkappen eingefasst und zwar in Blickrichtung auf die Figur 1 gesehen von einer oberen Endkappe 18 und von einer unteren Endkappe 20. Auch der dahingehende Kappenaufbau ist dem Grunde nach üblich, sodass an dieser Stelle hierauf nicht mehr näher eingegangen wird. Die obere Endkappe 18 weist eine nach oben vorstehende hohlzylindrische Führung 22 auf, die dem späteren Festlegen der Filtervorrichtung an Drittbauteilen dient, wie beispielsweise einem Vorratstank 24 gemäß der Darstellung nach der Figur 5, was im Folgenden noch näher erläutert werden wird. Ferner ist die hohlzylindrische Führung 22 koaxial zum scheibenförmigen Verlauf der oberen Endkappe 18 angeordnet und auf der gegenüberliegenden unteren Seite der oberen Endkappe 18 ist wiederum koaxial zur Führung 22 ein Strömungsleitkörper 26 vorhanden, der zu seinem freien unteren Ende hin konisch zuläuft und in einen Innenraum 28 des inneren Filterelementes 10 ausmündet. Der dahingehende Innenraum 28 ist sowohl von dem inneren Filterelement 10 als auch von dem äußeren Filterelement 12 umfasst. Insoweit begrenzt der Innenumfang 20 des inneren Filterelementes 10 nächstkommend den diesbezüglichen Innenraum 28.

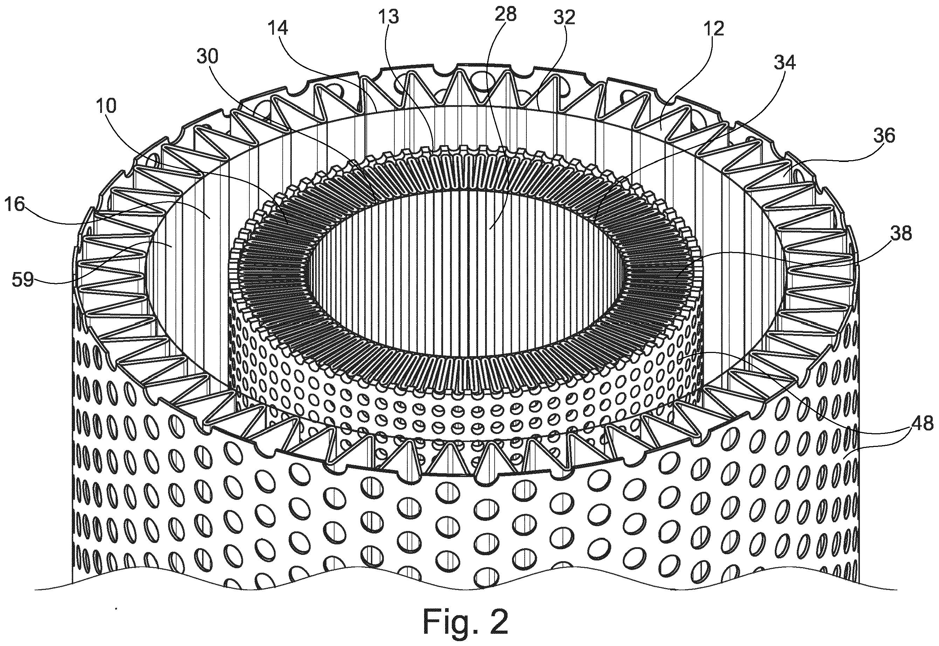

Wie insbesondere die Figur 2 zeigt, ist der Innenumfang 14 des äußeren Filterelementes 12 als auch der Innenumfang 30 des inneren Filterelementes 10, der jeweils durch eine umlaufende, ringförmige Linie 32 bzw. 34 begrenzt ist, als Länge dieser jeweiligen fiktiven Begrenzungslinie 32, 34 zu verstehen. Insbesondere grenzen die Faltentäler des jeweils plissierten Filtermediums 36, 38 für das äußere Filterelement 12 am Innenumfang 14 bzw. für das innere Filterelement 10 am Innenumfang 30 an. Sofern gemäß der Darstellung nach der Figur 2 das äußere Filterelement 12 weniger stark plissiert ist sprich eine geringere Filterfaltenzahl gezeigt ist als für das innere Filterelement 10 ist dies einer vereinfachten Darstellung geschuldet. Insbesondere kann die Filterfaltenzahl von äußerem Element 12 und innerem Element 10 im Wesentlichen einander entsprechen.

In jedem Fall soll nach der erfindungsgemäßen Lösung das äußere Filterelement 12 entlang seines Innenumfanges 14 gemessen eine Faltendichte von 0,1 bis 3 Falten pro Zentimeter Begrenzungslinie 32 und das innere Filterelement 10 entlang seines Innenumfanges 30 gemessen eine Faltendichte von 3 bis 7 Falten pro Zentimeter Begrenzungslinie 34 aufweisen. Hierbei ergibt sich in überraschender Weise ein deutlich verbessertes Gasabscheideverhalten als bei bekannten, vergleichbaren Lösungen auf diesem Gebiet.

Wie sich weiter aus Figur 1 ergibt, weist die untere Endkappe 20 eine mittige Durchlassöffnung 40 auf, die der Zufuhr eines Unfiltratstroms dient, der insoweit in den Innenraum 28 der Elementanordnung 10, 12 gelangt. Die Durchlassöffnung 40 ist als hohlzylindrischer, nach unten vorstehender Anschlussstutzen 42 ausgebildet, der entlang seines unteren freien Endbereiches auf der Innenumfangsseite einen Dichtring 44 trägt, mittels der der Innenraum 28 der Filtervorrichtung gegenüber der Umgebung abgedichtet ist, sobald die Filtervorrichtung auf eine korrespondierende Aufnahme 64, beispielsweise in dem Fluid-Vorratstank 24, aufgesetzt ist, was im Folgenden anhand der Figur 5 noch näher erläutert werden wird. Demgemäß bildet der nach unten vorstehende Anschlussstutzen 42 ein weiteres Befestigungselement aus, das dem Festlegen des Filters an einem korrespondierenden Drittbauteil dient, wie an der genannten Aufnahme 64 des Fluid-Vorratstanks 24, die aus einem tankseitigen, hohlen Anschlusszylinder gebildet dem außenumfangsseitigen Aufschieben des Anschlussstutzens 42 von oben her dient, der mit seinem Dichtring 44 im Einbauzustand in abdichtender Anlage mit dem Außenumfang der stutzenförmigen Aufnahme 64 ist. Dergestalt ist der Innenraum 28 des Filters gegenüber dem Inneren des Fluid-Vorratstanks 24 verlässlich abgedichtet. Die beiden Endkappen 18, 20 begrenzen jeweils ringförmige Aufnahmen 46, in die die stirnseitigen Enden des jeweiligen Elementes 10, 12 eingesetzt sind und dort über eine übliche Klebstoffverbindung (nicht dargestellt) mit den zugehörigen Endkappen 18, 20 eine feste Verbindung eingehen. Insoweit ist die Filtervorrichtung nach der Figur 1 als Ganzes und in tauschbarer Weise im Vorratstank 24, beispielsweise gemäß der Darstellung nach der Figur 5, aufnehmbar.

Da die in Figur 1 gezeigte Filtervorrichtung von innen nach außen mit Fluid durchströmt ist, weisen entgegen der Fluid-Durchströmungsrichtung die beiden Filterelemente 10, 12 auf ihrer Außenumfangsseite jeweils einen fluiddurchlässigen Stützkörper 48 auf, der in Figur 3 für das innere Element 10 der einfacheren Darstellung weggelassen ist.

Wie sich insbesondere aus der Darstellung nach der Figur 4 ergibt, weist das jeweils gasabscheidende Filterelement 10, 12 einen dreilagigen Gewebeaufbau 50 auf mit zwei Deckgewebelagen 52 und einer dazwischen aufgenommenen Zwischenlage 54. Die Maschenweite respektive der jeweilige Fluiddurchlass der Zwischenlage 54 als Ganzes ist dabei kleiner als die Maschenweite respektive der jeweilige Fluiddurchlass der beiden angrenzenden Deckgewebelagen 52. Des Weiteren ist bevorzugt der Fadendurchmesser für den Gewebeaufbau 50 der jeweiligen Deckgewebelage 52 größer als der Fadendurchmesser für die Zwischenlage 54. Die jeweiligen Maschenweiten respektive Durchlassgrößen und der jeweilige Fadendurchmesser, betreffend den Gewebeaufbau 50, sind jedenfalls derart gewählt, dass bei der Ausführungsform nach der Figur 1, gemäß der Darstellung nach der Figur 4 unten, es zu einer Koaleszenz von Luftblasen 28 bei der Durchströmung des zuinnerst liegenden Filterelementes 10 kommt. Die zunächst auf der Anströmseite A befindlichen Luftblasen 56 mit kleinem Volumen, die gegebenenfalls sogar in fein dispergierter Form im Fluidstrom sich befinden, werden durch den angesprochenen Koaleszenzeffekt mittels des Gewebeaufbaus 22, vorzugsweise Drahtgewebeaufbaus, auf der in Blickrichtung auf die Figur 4 unten gesehen rechten Abströmseite B zu größeren Luftblasen 58 zusammengeführt, die dann aufgrund des Archimedischen-Prinzips auftriebsbedingt im Fluid aufsteigen und dergestalt in die Umgebung abgeführt werden können.

Gemäß der Darstellung nach der Figur 4 oben werden die auf der Anströmseite A des äußeren Filterelementes 12 befindlichen Luftblasen 56 mit kleinem Volumen, die sich wiederum sogar in fein dispergierter Form im Fluidstrom befinden können, durch den angesprochenen Koaleszenzeffekt mittels des Gewebeaufbaus 22 auf der Anströmseite A zu größeren Luftblasen 58 zusammengeführt, die dann in Pfeilrichtung nach oben aufsteigen. Die insoweit am Außenumfang 13 des inneren Filterelementes 10 aufsteigenden größeren Luftblasen 58 sowie die entsprechend auf der Innenseite 54 des äußeren Filterelementes 12 aufsteigenden Blasen 58 werden im gemeinsamen Fluidraum 16 gesammelt und wie dies insbesondere in der Figur 3 dargestellt ist nach oben transportiert bis zu einem fiktiven Fluidniveau oder Füllstand 60, der eine Art Grenzfläche ausbildet, an der die vergrößerten Luftblasen 58 aus dem Fluid sprich der Flüssigkeit in die Umgebung austreten und insoweit ist dann das Fluid durch die angesprochene Gasabscheidung weitgehend abgereinigt.

Es versteht sich, dass die Entgasungsvorgänge nach der Figur 4 stark idealisiert und vereinfacht wiedergegeben sind. So kann es durchaus auf der Anströmseite A des Filterelementes 10 gleichfalls zu Entgasungsvorgängen kommen, wie ebenso auf der Abströmseite B des äußeren Filterelementes 12. Als besonders vorteilhaft haben sich dreilagige Entgasungsschichten erwiesen; es besteht aber auch durchaus die Möglichkeit nur einen zweilagigen Aufbau zu wählen mit größerer Maschen- oder Durchlassweite, der in Fluidströmungsrichtung gesehen eine zweite Lage nachfolgt mit demgegenüber kleineren Öffnungsquerschnitten. Darüber hinaus können auch mehr als drei Lagen zum Einsatz kommen, deren freie Durchlassquerschnitte sich pro Lage zusehends verringern oder die vorstehend vorgestellte Dreilagenanordnung wird in Mehrfachanordnung nochmals wiederholt.

Die Darstellung nach der Figur 3 zeigt wie das zu entgasende Fluid über die untere Mittenöffnung sprich den Anschlussstutzen 42 in den Innenraum 28 der Elementanordnung 10, 12 gelangt. Quer dazu erfolgt dann die Durchströmung von innen nach außen, wobei das innere Filterelement 10 eine erste Entgasungsstufe ausbildet und das äußere nachfolgende Filterelement 12 demgegenüber die zweite Entgasungsstufe des 2-stufigen Entgasungsfilters als der Filtervorrichtung bildet. Innerhalb des Fluidraums 16 aufsteigendes Gas regelmäßig in Form von Gasblasen durchquert das gezeigte angenommene Füllstandsniveau 60 und tritt dann in die Umgebung aus, indem das abgeschiedene Gas unterhalb der oberen Endkappe 18 von innen nach außen und nach Passieren des äußeren Filterelementes 12 nebst dem äußeren Stützkörper 48 oder Stützrohr in die Umgebung austritt. Aufsteigendes Gas im Innenraum 28 der Filtervorrichtung wird mittels des Strömungsleitkörpers 26 von innen nach außen verdrängt und gelangt dergestalt gleichermaßen nach Passieren der beiden Filterelemente 10, 12 nebst den zugehörigen Stützkörpern 48 nach draußen. Die Darstellung nach der Figur 5 zeigt in stark vereinfachter Weise und im Querschnitt gesehen einen kastenförmigen Fluid-Vorratstank 24 auf. In dem Vorratstank 24 sollen in zwei Reihen in Hintereinanderanordnung insgesamt sechs Filtervorrichtungen aufgenommen werden, wie in Figur 1 dargestellt. Andere Elementanordnungen sind aber ebenso möglich.

Die jeweilige Filtervorrichtung nach der Figur 1 wird dabei über ihren Anschlussstutzen 42 auf die Aufnahme 64 im Vorratstank 24 aufgesetzt, wobei die dahingehende Aufnahme 64 jeweils dem Fluideintritt von zu entgasendem Fluid dient, wobei der dahingehende Fluideintritt in der Figur 5 mit bodenseitig angeordneten Pfeilen angedeutet ist. Des Weiteren ist die jeweilige Filtervorrichtung über die hohlzylindrische Führung 22 auf der Oberseite der oberen Endkappe 18 in einer zugehörigen stabartigen Führung 66 auf der Tankinnenseite 68 aufgenommen. Dank den Befestigungselementen 22, 42 nebst der zugehörigen Führung 66 sowie Aufnahme 64 lässt sich der jeweilige Filter frei im Vorratstank 24 sicher positionieren respektive "aufhängen", so dass in einem weitgezogenen Toleranzfeld ein Filtereinbau möglich ist und der jeweilige Filter positioniert sich, vorzugsweise im Filterbetrieb aufgrund der herrschenden Strömungskräfte, von sich aus eigenständig innerhalb des Vorratstanks 24, bei Wahrung der Dichtfunktion über den jeweiligen Dichtring 44.

Wie bereits dargelegt, wird die jeweilige Filtervorrichtung von innen nach außen durchströmt, was mit den horizontal verlaufenden Pfeilen insoweit angedeutet ist. Nach Passieren des Füllstandsniveaus 60 durch Aufsteigen kann die Luft über einen zuoberst angeordneten Gasauslass 70 den Fluid-Vorratstank 24 verlassen und in die Umgebung austreten. Ansonsten wird das entgaste Fluid über eine zentrale Sammelöffnung 72, die in Blickrichtung auf die Figur 5 gesehen, unten ein vertikales Schottblech 74 des Vorratstanks 24 durchgreift zentral in einen Abgaberaum 76 weitergeleitet und von dort über einen Auslass 78 für Fluid aus dem Vorratstank 24 abgeführt.

Besteht das zu entgasende Fluid, insbesondere aus einem üblichen Kühlschmierstoff (KSS), wird das mittels des 2-stufigen Entgasungsfilters entgaste Fluid über den Auslass 78 zur weiteren Verwendung aus dem Tank 24 abgeführt, beispielsweise um im Rahmen einer spanenden Bearbeitung einer Werkzeugmaschine als aufbereiteter Kühlschmierstoff zu dienen, der vom Gas, wie Luft, befreit an der Stelle des spanabhebenden Prozesses nicht mehr ungewollt aufschäumt, was die Qualität der Bearbeitung ansonsten beeinträchtigen würde. Nach der Bearbeitung verbrauchter Kühlschmierstoff gelangt dann wieder auf die Eingangsseite der Entgasungsvorrichtung sprich über die jeweilige Aufnahme 64 in den angeschlossenen Entgasungsfilter in Form der jeweiligen Filtervorrichtung für einen erneuten Umlauf.

## Patentansprüche

1. Filtervorrichtung zumindest bestehend aus zwei Filterelementen (10, 12), die in Fluiddurchströmungsrichtung gesehen hintereinander angeordnet sind, **dadurch gekennzeichnet, dass** die beiden Filterelemente (10, 12) der Gasabscheidung aus dem Fluid dienen, die jeweils mit ihrem Innenumfang (30, 14) einen Innenraum (28) umfassen, wobei in Fluiddurchströmungsrichtung gesehen das äußere Filterelement (12) entlang seines Innenumfanges (14) gemessen eine Faltendichte von 0,1 bis 3 Falten pro cm und das innere Filterelement (10) entlang seines Innenumfanges (30) gemessen eine Faltendichte von 3 bis 7 Falten pro cm aufweisen.

2. Filtervorrichtung nach Anspruch 1, **dadurch gekennzeichnet, dass** das jeweilige Filterelement (10, 12) einen Hohlzylinder aus einzelnen Filterfalten ausbildet und dass die Filterelemente (10, 12) koaxial zueinander angeordnet sind.

3. Filtervorrichtung nach Anspruch 1 oder 2, **dadurch gekennzeichnet, dass** die einander benachbart gegenüberliegenden Filterelemente (10, 12) einen Ringraum (16) zwischen sich begrenzen.

4. Filtervorrichtung nach einem der vorstehenden Ansprüche, **dadurch gekennzeichnet, dass** die Filterelemente (10, 12) an ihren freien Stirnseiten zwischen zwei Endkappen (18, 20) unter Anlage mit denselben aufgenommen sind, von denen vorzugsweise eine (18) geschlossen und die andere (20) mit einer Durchlassöffnung (40) versehen ist, die in den Innenraum (28) des zuinnerst liegenden Filterelementes (10) ausmündet.

5. Filtervorrichtung nach einem der vorstehenden Ansprüche, **dadurch gekennzeichnet, dass** beide Endkappen (18, 20) auf ihren einander abgewandten Stirnseiten nach außen hin vorstehende Befestigungselemente (22, 42) aufweisen, die dem Festlegen eines Filters mit den beiden Filterelementen (10, 12) an korrespondierenden Drittbauteilen dienen, wie Aufnahmen (64, 66) auf der Innenseite eines Fluid-Vorratstanks (24).

6. Filtervorrichtung nach einem der vorstehenden Ansprüche, **dadurch gekennzeichnet, dass** das eine Befestigungselement (22) der einen, vorzugsweise oberen, Endkappe (18) aus einem hohlzylindrischen Ring (22) besteht, der bodenseitig geschlossen einstückiger Bestandteil dieser einen Endkappe (18) ist.

7. Filtervorrichtung nach einem der vorstehenden Ansprüche, **dadurch gekennzeichnet, dass** der als Führung konzipierte Ringkörper (22) koaxial zum oberen scheibenförmigen Verlauf der einen Endkappe (18) angeordnet ist und auf der gegenüberliegenden, unteren Seite koaxial zum Ringkörper (22) ein Strömungsleitkörper (26) vorhanden ist, der zu seinem freien, unteren Ende hin konisch zuläuft und in einen Innenraum (28) des inneren Filterelementes (10) des Filters ausmündet.

8. Filtervorrichtung nach einem der vorstehenden Ansprüche, **dadurch gekennzeichnet, dass** das weitere Befestigungselement (42) der anderen, vorzugsweise unteren, Endkappe (20) aus einem hohlzylindrischen Anschlussstutzen (42) besteht, der einstückiger Bestandteil der anderen Endkappe (20) ist, der entlang seines unteren Endbereiches in einer Aufnahmenut auf seiner Innenumfangsseite einen Dichtring (44) trägt, und der die Durchlassöffnung (40) umfasst.

9. Filtervorrichtung nach einem der vorstehenden Ansprüche, **dadurch gekennzeichnet, dass** der Ring (22) und der Aufnahmestutzen (42) entlang der Längsachse des Filters konzentrisch zueinander angeordnet sind und dass der freie Innendurchmesser des Ringes (22) kleiner, vorzugsweise um die Hälfte kleiner, ist als der freie Innendurchmesser des Aufnahmestutzens (42).

10. Filtervorrichtung nach einem der vorstehenden Ansprüche, **dadurch gekennzeichnet, dass** die Innenumfangsseiten von Ring (22) und des Anschlussstutzens (42) bis auf etwaige Dichtringaufnahmen absatzfrei ausgeführt sind.

11. Filtervorrichtung nach einem der vorstehenden Ansprüche, **dadurch gekennzeichnet, dass** das jeweilige Filterelement (10, 12) mehrlagig aufgebaut ist, vorzugsweise aus 2 bis 5 Lagen, besonders bevorzugt aus drei Lagen, besteht, die jeweils einzelne Durchlässe aufweisen, die in Fluiddurchströmungsrichtung gesehen zumindest teilweise von großen zu kleinen freien Querschnitten übergehen.

12. Filtervorrichtung nach einem der vorstehenden Ansprüche, **dadurch gekennzeichnet, dass** die jeweilige Lage (52, 54) aus einem Gewebe (50) gebildet ist und dass zwischen zwei Decklagen (52) mit Durchlässen in der Größenordnung von 200 bis 1000 *µ*m, vorzugsweise von 400 bis 600 *µ*m, besonders bevorzugt von 530 *µ*m eine Zwischenlage (54) mit Durchlässen in der Größenordnung von 0,1 bis 500 *µ*m, vorzugsweise von 30 bis 150 *µ*m, besonders bevorzugt von 45 *µ*m aufgenommen ist.

13. Filtervorrichtung nach einem der vorstehenden Ansprüche, **dadurch gekennzeichnet, dass** das jeweilige Gewebe (50) aus Edelstahl, Polypropylen (PP), Polyamid (PA) oder Polyethersulfon (PES) aufgebaut ist.

14. Filtervorrichtung nach einem der vorstehenden Ansprüche, **dadurch gekennzeichnet, dass** das jeweilige Filterelement (10, 12) zumindest auf seiner der Fluiddurchströmung jeweils abgewandten Seite von einem fluiddurchlässigen Stützkörper (48) umfasst ist.

15. Tank-Entgasungsfilter zumindest bestehend aus einem Tank (24), der der Fluidaufnahme bis zu einem vorgebbaren Füllstandsniveau (60) dient und mit mindestens einer Filtervorrichtung nach einem der vorstehenden Ansprüche, die jeweils bodenseitig an einen Anschlussstutzen eines Unfiltratanschlusses im Tank (24) angeschlossen ist und die abgeschiedenes Gas oberhalb des jeweiligen Füllstandsniveaus (60) abgibt, wobei voneinander separierte Auslässe (70; 78) für Gas und für Fluid aus dem Tankbehälter (24) vorgesehen sind.

16. Verwendung einer Filtervorrichtung nach einem der Ansprüche 1 bis 8, vorzugsweise unter Einsatz eines Tank-Entgasungsfilters nach Anspruch 9 zum Entgasen von Kühlschmierstoff, der insbesondere im Rahmen einer spanenden Bearbeitung eingesetzt ist.
